Europäisches Patentamt

European Patent Office

Office européen des brevets

(19)

(11) **EP 0 756 554 B1**

(12) **EUROPEAN PATENT SPECIFICATION**

(45) Date of publication and mention
of the grant of the patent:
**19.05.2004 Bulletin 2004/21**

(51) Int Cl.⁷: **B63B 1/06**, B63B 1/32

(21) Application number: **96925584.3**

(86) International application number:
**PCT/GR1996/000005**

(22) Date of filing: **20.02.1996**

(87) International publication number:
**WO 1996/026104 (29.08.1996 Gazette 1996/39)**

(54) **SHIP'S STEM DUCT WITH AIRFOIL SECTION**

SCHIFFSBUGROHR MIT AERODYNAMISCHEM FLÜGELPROFIL52

CONDUIT DE NEZ A PROFIL AERODYNAMIQUE POUR NAVIRE

(84) Designated Contracting States:
**DE ES FR GB IT NL PT SE**
Designated Extension States:
**AL**

(30) Priority: **22.02.1995 GR 95100067**

(43) Date of publication of application:
**05.02.1997 Bulletin 1997/06**

(73) Proprietor: **Petromanolakis, Emmanuel E.
17563 P. Faliron, Athens (GR)**

(72) Inventor: **Petromanolakis, Emmanuel E.
17563 P. Faliron, Athens (GR)**

(56) References cited:
WO-A-92/22456          DE-A- 3 045 977
DE-A- 3 508 203        DE-C- 927 256
DE-C- 931 090          FR-A- 699 943
FR-A- 771 067          FR-A- 847 445
US-A- 1 859 139

**Description**

THE FIELD OF THE ART

The present invention refers to the technical field of hydrodynamics, and in particular to the means and methods for improving the flow characteristics of sailing vessels. Specifically, it refers to the stem duct of a ship, featuring an airfoil section and achieving a significant improvement in the ship's flow characteristics.

THE PRIOR ART

In shipping technology in general, efforts have been made to reduce the frictional resistance and the wave making resistance encountered by ships, and, consequently, to improve their sailing through the compact mass of water they traverse. For this reason, and especially for the limitation of the height of the bow wave that the ship has to encounter, a technique has been established, according to which the fore body of the ship's hull is modulated in a bulb or ball shape. In this way, the wave making resistance encountered by the ship is reduced.

The ship's frontal surface through, namely the extensive bow area participating in the process of making way to propel the ship through the water, is very wide. Taking into consideration that the propulsion resistance is proportional to the square of the ship's velocity, then the increase of power needed to overcome this resistance, is also proportional.

To overcome this problem and to reduce the propulsion resistance and the wave making energy that the ship's frontal surface encounters, the attachment of a duct on the ship's stem has been proposed in the past (E.E. Petromanolakis, WO 92/22456). As the ship impacts to the water mass through this duct, which extends in height above and beneath the ship's waterline, and not with it's entire frontal surface, the reduction of the wave making resistance created by the ship's propulsion is expected. It was not possible however for such a duct - acting as a wave making resistance absorber - to produce the expected results, since it was not possible to differentiate the flow through the duct from the sea water flow around the frontal surface of the ship significantly, although a small variation was possible. Other attempts of the prior art, like the French Patent FR-A-1 017897, have produced negative results, since not only they did not achieve the reduction of the wave making resistance developed during ship's propulsion, but furthermore they comprised moving parts, which reqired the supply of power by the ship's main engine. The result was negative as far as the power required for the ship's propulsion was concerned.

Further, WO-A-82 03055 (SEE) proposed a pipe to convey water from the stem to the stern of the ship, in order to use it at this point for the propulsion of revolving elements. This is a totally different aspect; furthermore it is highly uncertain if it can be implemented, because of the friction, the turbulence etc.

Other documents of the prior art which have attempted to solve the same abovementioned problems are DE-C-931090 (Kuckuck), DE-A-30 45977 (M.A.N. AG), DE-A-3508203 (WIESER) and FR-A-847445 (TISCHENBACH).

Most of these patents do not disclose any kind of hydrodynamic section and more particularly airfoil section, whereas they do not achieve to create differentiated flow in the passages defined interiorly of the duct as compared to flow external to the duct. Prior art documents fail to create this necessary differentiated condition, because they on the one hand have an open end and not closed bottom, whereas on the other hand they extend at an insufficient height above the ship's waterline. Characteristically, DE-C-931090 defines in the specification and illustrates in the drawings, the height of the duct above ship's waterline to be such as to make the duct visible above waterline, which is a height that cannot ensure separation of the flow within the duct from the flow outside it.

Experimental work on the proposed stem duct has proven that the airfoil configuration and orientation of the duct with respect to the vessel's bow is of significant importance for achieving the optimum results with regard to the increase in the water flow within the duct and correspondingly decreased pressure interior to the stem duct and flow depression downstream of the same. Many of the patents of the cited prior art fail to provide advantageous outcome due to the fact that they either have an adverse airfoil configuration, as by way of example airfoils with concave interior surface or they are located so as to create adverse water flow conditions interior to the duct, as by way of example an orientation forming a continously diverging flow passage.

Thus, the main object of the present invention is to effectively overcome the abovementioned disadvantages and drawbacks of the prior art and propose a ship's stem duct with such a configuration and orientation, that will ensure the differentiation of the characteristics of the flow interiorly to the stem duct from the flow outside it, so as to create an increased water flow speed through the passage in between the stem duct and the bow frontal surface compared to the water flow speed outside it, thereby causing the reduction of pressure interior to the stem duct and a flow depression downstream from the stem duct, the above resulting to a proportional decrease in the resistance to the ship's propulsion. In this way the ship's slip is improved and the result is a speed increase and/or a decrease in the power consumption with corresponding reduction in the fuel consumption. This is achieved by the features of the sterm duct defined in claim 1.

A further object of the present invention is to provide the proposed stem duct with an orientation and an airfoil configuration, such as to advantageously render the results of increased water flow speed and decreased pressure within the interior of the duct relative to the speed and pressure around the outer surface of the same, the optimum duct orientation and airfoil configuration being that of an airfoil having a convex interior surface and forming a flow passage on either side of the vessel's bow, which initially converges and subsequently diverges in a rearward direction of the ship.

All these and other objects, characteristics and advantages of the present invention will be clarified in the detailed description below.

BRIEF DESCRIPTION OF THE DRAWINGS

The present invention will be made clear to those skilled in the art, by reference to the accompanying drawings, in which are depicted some illustrative but not restrictive embodiments of the invention.

Fig. 1 presents a side view of a ship with a bulb/ball stem, without a propulsion resistance reducing stem duct.

Fig. 2 presents a top view of the bow section of the ship of Fig. 1, with a diagram of the streamlines formed during the propulsion of the ship.

Fig. 3 presents a front view of a fore body section of the ship of Fig. 1.

Fig. 4 presents the side view of a ship with bulb/ball stem, additionally fitted with a stem duct with airfoil section, which generally follows the bow configuration and is closed on top, welded at the sides of the ship.

Fig. 5 presents a top view cross section along the waterline of the ship of Fig. 4.

Fig. 6 presents the front view of a fore body section of the ship of Fig. 4.

Fig. 7 presents a top cross sectional view of the fore body of the ship of Fig. 4, with a diagram of the streamlines formed during the propulsion of the ship.

Fig. 8 presents the side view of a ship with bulb/ball stem, additionally fitted with a stem duct of airfoil section, attached to the side of the ship through a set of supporting elements.

Fig. 9 presents a top cross sectional view along the waterline of the ship of Fig. 8.

Fig. 10 presents the front view of a fore body section of the ship of Fig. 8.

Fig. 11 presents the side view of aship with bulb/ball stem, with a stem duct beginning exactly at the stem line and generally following the ship's lines.

Fig. 12 presents the side view of a ship, where the stem duct is fitted internally with a set of parallel plates, arranged longitudinally to render a laminar flow through the stem duct.

Fig. 13 presents a top cross sectional view of the fore body of the ship of Fig. 12.

Fig. 14 presents a front view of a fore body section of the ship of Fig. 12.

Fig. 15 presents a perspective side view of the ship's fore body section, with the stem duct having a shape different from the ship's stem lines.

Fig. 16 presents a diagram of horsepower / speed for a common vessel, for a vessel with a bulb/ball stem and for a vessel equipped with the stem duct of the invention.

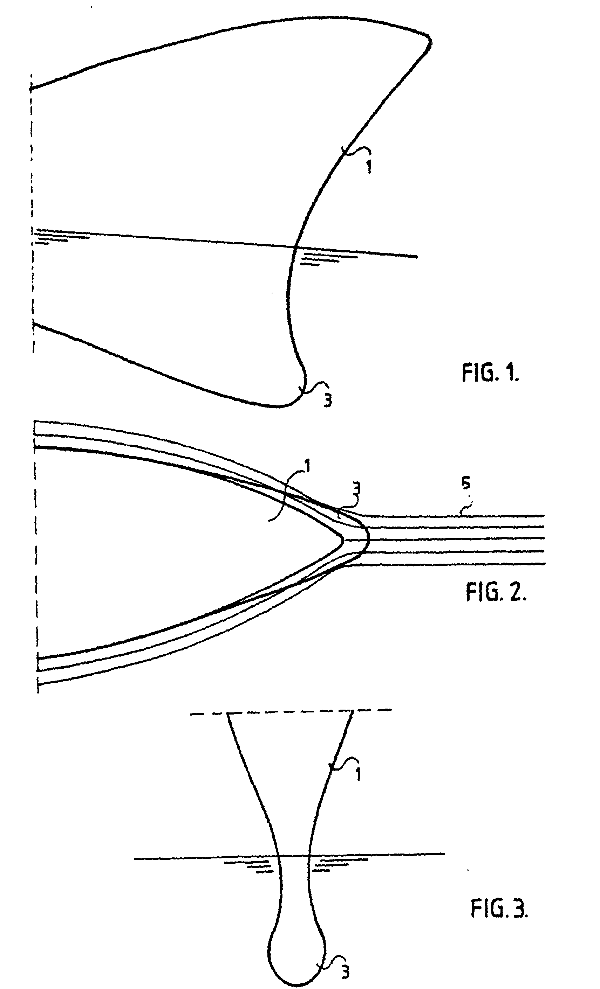

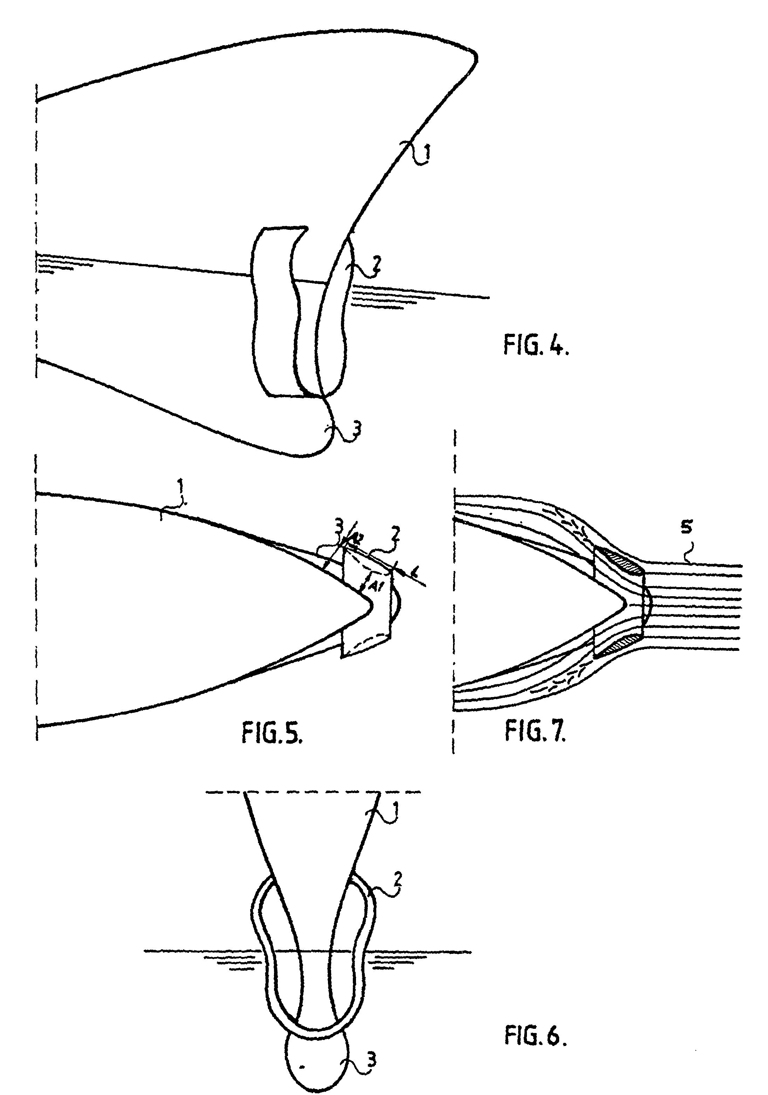

Initially, in Figs. 1,2 and 3, are presented the perspective side view, top view and front view of a vessel 1 with bulb/ball 3, but without the stem duct of the invention. As indicated particularly in Fig. 2, the fluid streamlines around the bow frontal surface maintain the same density before and after the stem, on both sides of the bow frontal surface. The effect of fitting the stem duct of the invention around the ship's bow frontal surface, as diagramatically and illustratively presented in Fig.7, is the differentiation of the flow characteristics and especially a reduced density of the streamlines 5, downstream the stem duct.

In Figs. 4,5 and 6 are presented the perspective side view, the top view and the front view of a vessel 1 with a bulb / ball 3 and with the airfoil section stem duct 2. Naturally, the duct can also be installed to ships without a bulb / ball.

The stem duct 2 of the invention is fitted at the bow of the ship 1 and on both sides of its frontal surface, extending in height above and beneath the ship's waterline. The height of the duct 2 above the ship's waterline is preferably such, that the upper part of the duct exceeds the expected maximum wave height, e.g. 5 - 6 meters above the waterline. In any case the proposed stem duct extends at a height such that under any conditions of ship's loading it lies above the water and the flow within the duct is separated from the flow outside it.

Beneath the waterline, the duct can reach down to the bulb / ball 3, if it exists, or even to cover it, concealing it inside.

The duct 2 generally follows the morphology, i.e. the geometry of the ship's stem lines and it closes at the bottom. The duct can extend in the direction of the flow, fore or aft the bow, or occupy any intermediate position. Preferably, a position is selected, where the duct protrudes fore of the bow in the direction of the flow, by approximately half its length. The duct 2 can be partially or fully opened or closed at the top, always satisfying the condition that the flow within the duct is absolutely separated from the flow outside it.

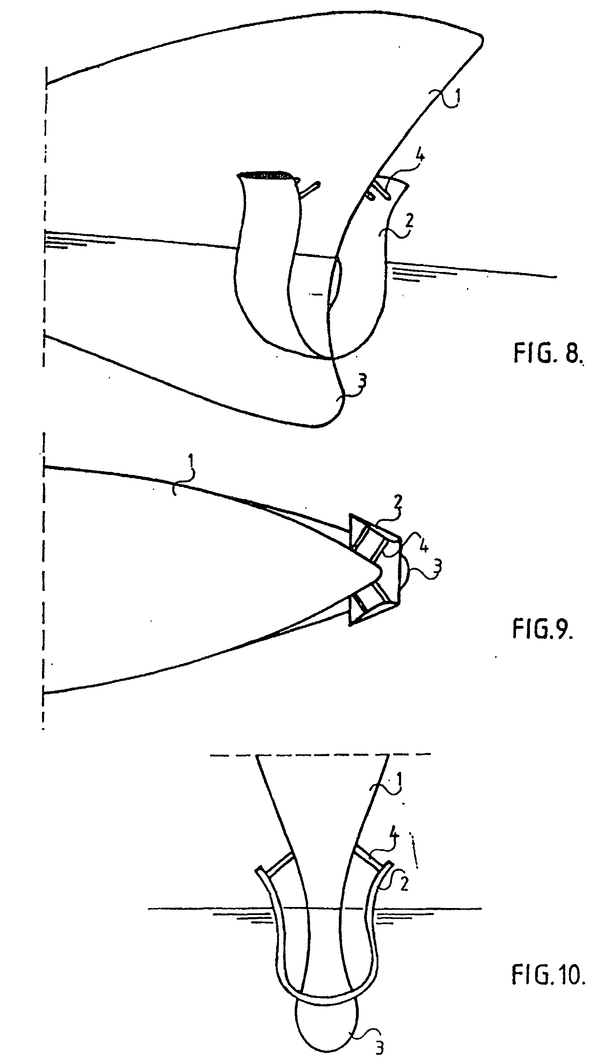

In Figs. 4,5,6 a duct is presented, with converging walls that close on top, attached and welded to the ship's sides, whilst in Figs. 8,9 and 10 a ship is presented, with the stem duct 2 open on top, attached to the ship's sides through an appropriate set of supporting elements 4.

When such supporting elements 4 are used, they should preferably have a hydrodynamic section, convex on both sides, arranged in the direction of the flow, or alternatively they may be pipes of any conventional form.

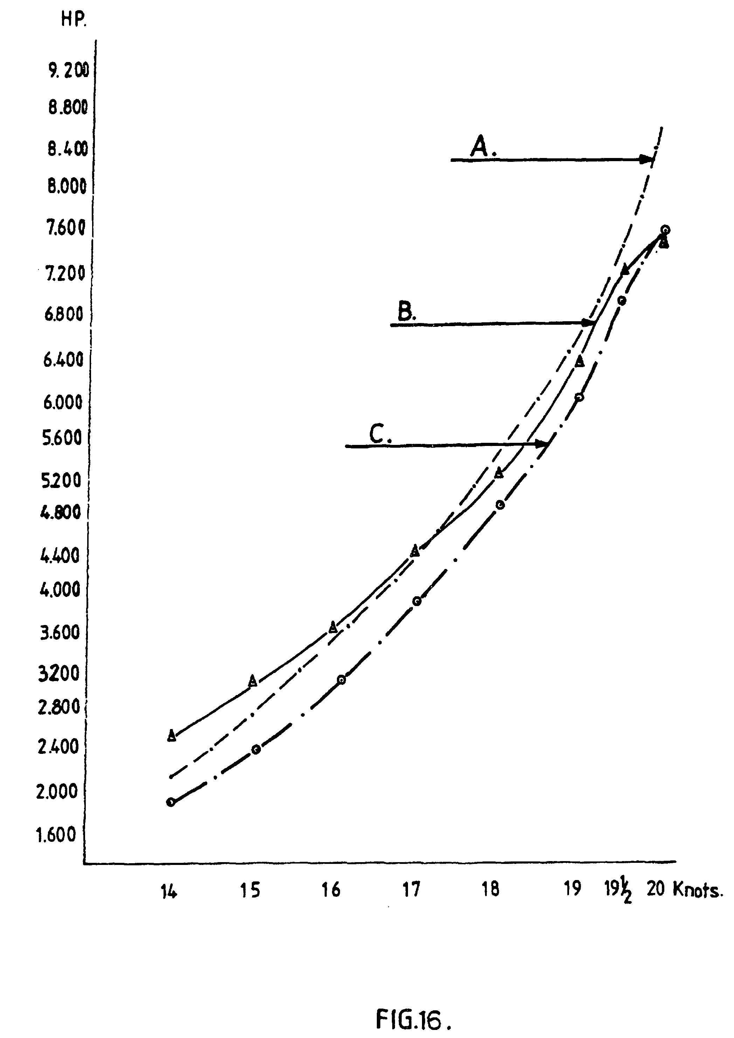

In the constructions presented in Figs. 4,5 and 6 with the duct closed on top and in the construction presented in Figs. 8,9, 10 with the duct 2 open on top, attached to the ship 1 through the supporting elements 4, the duct generally appears to follow in shape the general morphology of the bow in the vertical direction. It is possible however that the duct has a different shape. Thus the duct can be arranged around the bow frontal surface, with any geometrical shape, in any case different than the general morphology of the bow frontal surface in the vertical direction, as by way of example is presented in the perspective side view of Fig. 15.

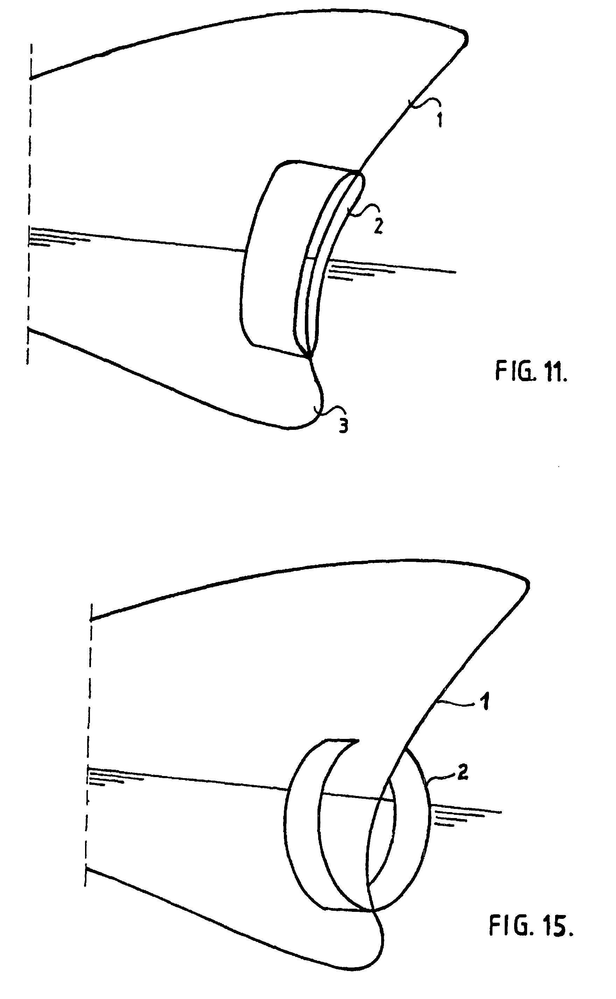

It is also pointed out that the stem line of a ship, equipped with a stem duct can be either parallel or inclined to the normal vertical, the ship being regarded in still position. The incident line around the duct 2 can also be inclined, with inclination similar or different than the inclination of the stem line. As illustratively presented in Fig.11, the incident line of duct 2 follows exactly the ship's stem line.

The duct 2 can be used with any bow morphology in general. By way of example, the ship's bow adequately thinned along the line of incidence of sea water may be preferable.

When the stem duct proposed in the present invention is installed, a passage 7 is formed for the flow, between the interior surface of duct 2 and the bow frontal surface. The flow passage 7 includes at least one inlet opening and at least one outlet opening for the water flow on each side of the ship. The characteristic feature of the duct 2 of the present invention is that the duct walls have an airfoil section in the lognitudinal direction of the flow, from the abovementioned at least one inlet opening to the abovementioned at least one outlet opening, on both sides of the ship 1. This airfoil section has its leading edge at the abovementioned at least one flow inlet opening and its trailing edge at the abovementioned at least one flow outlet opening.

The convex side of the airfoil section duct 2 constitutes the internal surface of the duct, so that a higher flow speed and a correspondingly lower pressure is created in the internal convex side with respect to the external side of the duct, as known by the airfoil theory. The duct's external side may have either a flat or a slightly concave surface. Conseqeuently, such a section of the duct 2 of the invention causes the water mass passing through the passage 7 to gain an increased speed in relation to the water mass flowing around the external walls of the duct 2. This differentiation of the flow velocity results in a pressure drop inside the duct and in the creation of depression downstream the duct 2, thus rendering an improved laminar flow around the vessel's bow, decrease of the bow wave height and consequently achieving a better slip, of the vessel.

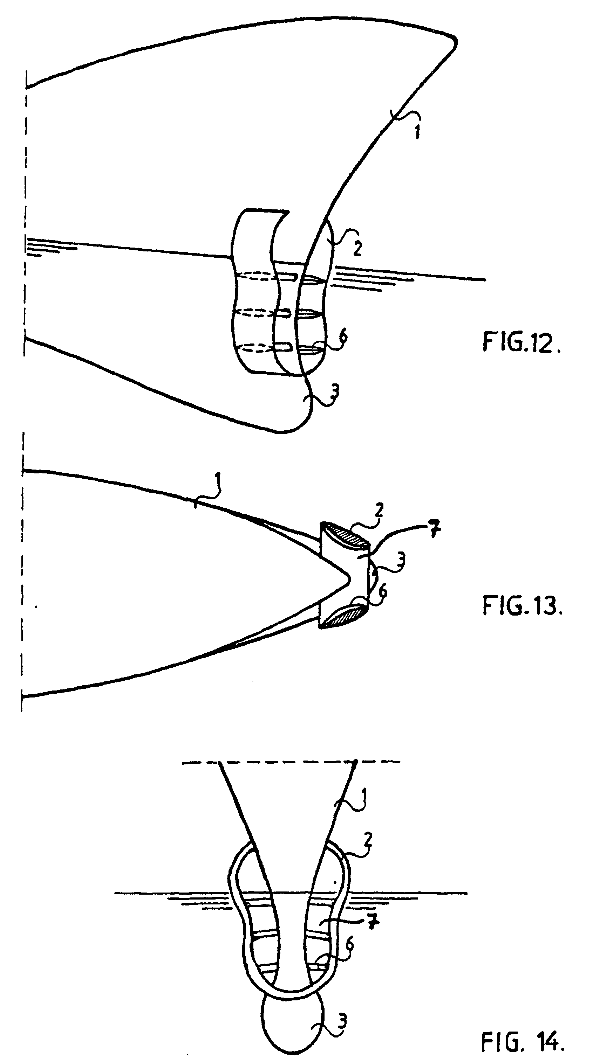

As presented in Figs. 12, 13 and 14 the proposed airfoil section duct contains a series of projecting guide plates 6 to render an improved laminar flow, attached longitudinally on its internal surface. Guides plates 6 preferably have an airfoil section and are oriented with their leading edge at the abovementioned flow inlet opening and their trailing edge at the flow outlet opening. Each one of these guide plates is mounted at either both the interior surface of each of the side wall portions of the duct and the corresponding bow side surface or it is mounted at either the duct's wall portions or at the correspoding one of the bow side surfaces. Slots can also be provided along or across the distance between the side wall portions of the duct and the bow sides, so as to allow vertical communication of water flow within the flow passages in between consecutive guide plates.

A similar series of projecting guide plates can also be fitted to the duct's external surface.

Experiments have been conducted on a model, using the duct of the invention with airfoil coefficients CD=0.012 and CL=1.3. An improvement of the flow characteristics resulted from these experiments. Thus, the towing resistance was reduced by a percentage of around 7.5% and a corresponding horsepower saving of around 10% - 12% was achieved for the vessel.

The reduction of the above experimental data onto a real vessel was performed by the FROUDE method. The above experiments were conducted with a bare hull model, without a rudder, a propeller, etc. The results are presented in the attached table, where the horsepower values are shown for different values of speed. Three cases are presented: the case of a vessel with a small bulb without the proposed duct of the invention (Case A); the case of the same vessel with an improved bulb, specifically designed by the National Technical University of Athens with the scope of comparing the invention with the state of the art (Case B); and the case of a vessel with a small bulb, as in case A, on which the stem duct of the invention was installed (Case C). The percentages referred to in the attached table indicate a relative increase (+) or decrease (-) of the horsepower, in comparison with case A of a ship with a small bulb and without a stem duct. The same results also appear in the diagram of Fig. 16.

| VESSEL SPEED VERSUS HORSEPOWER | | | |
|---|---|---|---|
| VESSEL SPEED (KNOTS) | CASE A VESSEL WITH SMALL BULB WITHOUT DUCT | CASE B VESSEL WITH IMPROVED BULB | CASE C VESSEL WITH STEM DUCT OF INVENTION |
| 14 | 2264 | 2581 + 14% | 2031 -10% |
| 15 | 2885 | 3213 + 11% | 2548 -12% |
| 16 | 3652 | 3695 + 1% | 3197 -12.5% |
| 17 | 4442 | 4508 + 1% | 4066 - 8.5% |
| 18 | 5582 | 5310 + 5% | 5000 -11.6% |
| 19 | 6672 | 6442 -3% | 6068 -9% |
| 19.5 | 7613 | 7361 -3% | 7029 -8% |
| 20 | 8779 | 7641 -13% | 7726 -12% |

Regarding the proposed stem duct, it must be pointed out that its location on the bow, its height above and beneath the ship's waterline, its length along the direction of the flow, its inclination with respect to the vessel's symmetry axis and its distance from the ship's hull are determined in accordance with the bow morphology, the hull coefficients and the vessel's speed.

At this point it has to be mentioned that the description of the present invention was made by reference to some illustrative embodiments and that the ivention is not limited to those. Thus any modification or alteration regarding the shape, the size, the dimensions, the materials and the construction and assembly components of the proposed stem duct with an airfoil section is considered to be included in the aims and scope of the present invention, as long as it does not constitute a new inventive step and does not contribute to the technical evolution of the prior art.

From the analysis of the experiments made on the abovementioned model for the specific airfoil with CD=0.012 and CL=1.3, resulted the following formula for the determination of duct's location i.e. of the airfoil inclination with respect to the vessel's symmetry axis, which has to lie in the range of values defined by:

$$A2-A1=0.0425L \pm 0.005L$$

where, as presented in the accompanying Fig. 5, A1 is the minimum distance between the duct's interior surface and the ship's bow frontal surface and A2 is the distance between the duct's trailing edge and the ship's bow frontal surface, where A2 is measured from the innermost end of the duct's trailing edge. Both A1 and A2 are measured along the same waterline and L is the length of the airfoil in the direction of the flow. Consequently, a preferred embodiment of the invention implies that all waterlines within the sea water satisfy the above formula and the inclination of the airfoil section is maintained as constant as possible on all waterlines. Naturally, the above formula defines a preferable range of values for the duct airfoil and its spacing from the ship's bow frontal surface. From the above it follows that a preferred orientation of the proposed stem duct with respect to the bow frontal surface is such that the water flow passage between an interior surface of the stem duct and the bow on either side of the bow of the ship initially converges and subsequently diverges in a rearward direction of the ship.

An experimental application of the airfoil section stem duct of the invention has already been made on a real vessel and specifically on the F/B RODOS, under Greek flag, registered in Rhodes island and owned by DANE SEALINE Company. This experimental application has given very satisfactory results.

**Claims**

**1.** A stem duct (2) for use on a ship (1) having a bow including opposed bow sides and a bow frontal surface, said stem duct comprising wall portions adapted to be mounted to the bow of the ship (1) and to extend close to the bow frontal surface and upwardly on the opposed bow sides, a water flow passage (7) being defined between an interior surface of said stem duct (2) and the bow, said stem duct (2) being mounted externally to the bow, extending aft and forwardly of the bow frontal surface and having a closed bottom end, **characterized in that** said side wall portions extend at a height above the waterline when the ship is in motion, such that under any condition of ship's loading to obstruct sea water flowing within said flow passages (7) from mixing with water flowing outside it, each one of said wall portions including an airfoil portion extending generally in a longitudinal direction of the ship (1), said airfoil portions having on the opposed bow sides of the ship a leading edge defining at least one inlet opening of said water flow passage (7) and a trailing edge defining at least one outlet opening of said water flow passage (7), the airfoil portions having convex interior surfaces, said flow passages converging and then diverging in a rearward direction of the ship, wherein said convex interior surfaces increase the speed of water passing through said flow passages relative to the speed of water flowing around the outer surface of said stem duct (2), to create a reduced pressure interior to said stem duct (2) and a flow depression downstream from said stem duct (2), said stem duct comprises vertically spaced guide plates with airfoil section, projecting inwardly from the interior surface of said side wall portions and adapted to extend generally in the longitudinal direction of the ship, so as to enhance laminar water flow through said flow passages (7), wherein the airfoil section of said guide plates is oriented with its leading edge at said inlet opening of said water flow passage (7) and its trailing edge at said outlet opening of said water flow passage (7), and wherein said vertically spaced guide plates are mounted at either said interior surface of each said side wall portions or at each corresponding one of said bow sides and/or are provided with slots along or across the distance in between said side wall portions and said bow sides, so as to allow vertical communication of water flow within said flow passages (7).

2. The stem duct of claim 1, **characterised in that** it is shaped to substantially follow the shape of the oposed bow sides, substantially equal distance being obtained between wall portions of said duct and said opposed bow sides.

3. The stem duct of claim 1, **characterised in that** said airfoil portions are adapted to be mounted to the opposed bow sides such that an upper end of the airfoil portions are closed being welded on each side of the bow frontal surface of said ship (1), whereby is defined a perimetrically closed stem duct (2).

4. The stem duct of claim 1, **characterised in that** it comprises supporting elements (4) adapted to be mounted to the opposed bow sides such that said stem duct (2) is partially open at the top on either side of the ship (1).

5. The stem duct of claim 3 or 4, **characterised in that** it comprises vertically spaced guide plates with airfoil section projecting inwardly from the interior surface of each of said side wall portions and adapted to extend generally in the longitudinal direction of the ship up to the opposed bow sides so as to enhance laminar water flow through said flow passages (7), wherein the airfoil section of said guide plates is oriented with its leading edge at said inlet opening of said water flow passage (7) and its trailing edge at said outlet opening of said water flow passage (7).

6. The stem duct of claim 1, wherein said stem duct has a flat exterior surface.

7. The stem duct of claim 1, wherein said stem duct has a concave exterior surface.

8. The stem duct of claim 2, mounted on a vessel in combination with adequately thinned said opposed bow sides.

9. Ship's stem duct with airfoil section according to the above claims 1-8, wherein the location of said duct on the ship's bow, the geometrical shape of said airfoil section, the height of said duct above and beneath the ship's waterline, its length along the direction of the flow, its inclination with respect to the vessel's symmetry axis and its distance from the ship's hull are determined in accordance with the bow morphology, the hull coefficients and the ship's speed.

**Patentansprüche**

1. Vorstevenleitkanal (2) zur Verwendung an einem Schiff (1), das einen Bug mit gegenüberliegenden Bugseiten und einer Bugstirnfläche hat,

- wobei der Vorstevenleitkanal Wandabschnitte zum Anbringen am Bug des Schiffs (1) hat, die sich bis in die Nähe der Bugstirnfläche und an den gegenüberliegenden Bugseiten nach oben erstrecken, wodurch ein Wasserdurchflusskanal (7) zwischen einer Innenfläche des Vorstevenleitkanals (2) und dem Bug gebildet wird, und
- wobei der Vorstevenleitkanal außen am Bug angebracht ist und sich von der Bugstirnfläche nach hinten und nach vorne erstreckt und ein geschlossenes unteres Ende hat,

**dadurch gekennzeichnet,**

- **dass** sich die Seitenwandabschnitte auf eine Höhe über der Wasserlinie erstrecken, wenn sich das Schiff in Bewegung befindet, so dass bei jedem Beladungszustand des Schiffs das Seewasser daran gehindert wird, sich in den Durchflusskanälen (7) mit dem außerhalb davon strömenden Wasser zu vermischen,

- **dass** jeder der Wandabschnitte einen Tragflügelabschnitt hat, der sich insgesamt in Längsrichtung des Schiffs (1) erstreckt,
- **dass** die Tragflügelabschnitte auf den gegenüberliegenden Bugseiten des Schiffs eine Vorderkante, die wenigstens eine Einlassöffnung des Wasserdurchflusskanals (7) bildet, und eine Hinterkante hat, die wenigstens eine Auslassöffnung des Wasserdurchflusskanals (7) bildet,
- **dass** die Tragflügelabschnitte konvexe Innenflächen haben,
- **dass** die Durchflusskanäle Richtung zum Heck des Schiffs hin konvergieren und dann divergieren,
- **dass** die konvexen Innenflächen die Geschwindigkeit des durch die Durchflusskanäle hindurchgehenden Wassers bezüglich der Geschwindigkeit des um die Außenfläche des Vorstevenleitkanals (2) herum strömenden Wassers erhöhen, um im Inneren des Vorstevenleitkanals (2) einen verringerten Druck und stromab von dem Vorstevenleitkanal (2) einen Strömungsunterdruck zu erzeugen,
- **dass** der Vorstevenleitkanal vertikal im Abstand angeordnete Leitplatten mit Tragflügelprofil hat, die von der Innenfläche der Seitenwandabschnitte nach innen vorstehen und sich insgesamt in Längsrichtung des Schiffs erstrecken, so dass die laminare Strömung des Wassers durch die Durchflusskanäle (7) verbessert wird,
- **dass** das Tragflügelprofil der Leitplatten mit seiner Vorderkante zur Einlassöffnung des Wasserdurchflusskanals (7) und mit seiner Hinterkante zur Auslassöffnung des Wasserdurchlasskanals (7) ausgerichtet ist, und
- **dass** die vertikal im Abstand angeordneten Leitplatten entweder an der Innenfläche jedes der Seitenwandabschnitte oder an jeder entsprechenden Seite der Bugseiten angebracht und/oder mit Schlitzen längs oder quer über dem Abstand zwischen den Seitenwandabschnitten und den Bugseiten versehen sind, damit eine vertikale Verbindung des Wasserdurchflusses in den Durchflusskanälen (7) möglich ist.

2. Vorstevenleitkanal nach Anspruch 1, **dadurch gekennzeichnet, dass** er so geformt ist, dass er im Wesentlichen der Form der gegenüberliegenden Bugseiten folgt, wobei ein im Wesentlichen gleicher Abstand zwischen den Wandabschnitten des Leitkanals und den gegenüberliegenden Bugseiten erreicht wird.

3. Vorstevenleitkanal nach Anspruch 1, **dadurch gekennzeichnet, dass** die Tragflügelabschnitte an den gegenüberliegenden Bugseiten so anbringbar sind, dass ein oberes Ende der Tragflügelabschnitte geschlossen ist, wenn sie an jeder Seite der Bugstirnfläche des Schiffs (1) angeschweißt sind, wodurch ein am Umfang geschlossener Vorstevenleitkanal (2) gebildet wird.

4. Vorstevenleitkanal nach Anspruch 1, **dadurch gekennzeichnet, dass** er Halteelemente (4) aufweist, die an den gegenüberliegenden Bugseiten so anbringbar sind, dass der Vorstevenleitkanal (2) oben an jeder Seite des Schiffs (1) teilweise offen ist.

5. Vorstevenleitkanal nach Anspruch 3 oder 4, **dadurch gekennzeichnet, dass** er vertikal im Abstand angeordnete Leitplatten mit Tragflügelprofil aufweist, die von der Innenfläche jedes der Seitenwandabschnitte nach innen vorstehen und sich insgesamt in Längsrichtung des Schiffs bis zu den gegenüberliegenden Bugseiten erstrecken, wodurch die laminare Strömung des Wassers durch die Durchflusskanäle (7) verbessert wird, wobei das Tragflügelprofil der Leitplatten mit seiner Vorderkante zur Einlassöffnung des Wasserdurchflusskanals (7) und mit seiner Hinterkante zur Auslassöffnung des Wasserdurchflusskanals (7) ausgerichtet ist.

6. Vorstevenleitkanal nach Anspruch 1, der eine ebene Außenfläche hat.

7. Vorstevenleitkanal nach Anspruch 1, der eine konkave Außenfläche hat.

8. Vorstevenleitkanal nach Anspruch 2, der an einem Schiff in Kombination mit entsprechend verdünnten gegenüberliegenden Bugseiten angebracht ist.

9. Vorstevenleitkanal eines Schiffs mit Tragflügelprofil nach einem der Ansprüche 1 bis 8, bei welchem die Position des Leitkanals an dem Schiffsbug, die geometrische Form des Tragflügelprofils, die Höhe des Leitkanals über und unter der Schiffswasserlinie, seine Länge in Strömungsrichtung, seine Neigung bezüglich der Schiffsymmetrieachse und sein Abstand vom Schiffsrumpf in Übereinstimmung mit der Bugmorphologie, den Rumpfkoeffizienten und der Schiffsgeschwindigkeit bestimmt sind.

**EP 0 756 554 B1**

**Revendications**

1. Conduit d'étrave (2) pour utilisation sur un navire (1) ayant une proue comportant des côtés de proue opposés et une surface frontale de proue, ledit conduit d'étrave comprenant des parties de paroi adaptées pour être montées sur la proue du navire (1) et pour s'étendre près de la surface frontale de proue et vers le haut sur les côtés de proue opposés, un passage d'écoulement d'eau (7) étant défini entre une surface intérieure dudit conduit d'étrave (2) et la proue, ledit conduit d'étrave (2) étant monté extérieurement à la proue, s'étendant vers l'arrière et vers l'avant de la surface frontale de proue et ayant une extrémité inférieure fermée, **caractérisé en ce que** lesdites parties de paroi de côté s'étendent à une certaine hauteur au-dessus de la ligne de flottaison lorsque le navire est en mouvement, d'une manière telle que, dans n'importe quelle condition de chargement du navire, l'eau de mer s'écoulant dans les passages d'écoulement (7) est empêchée de se mélanger à l'eau s'écoulant à l'extérieur de lui, chacune desdites parties de paroi comportant une partie profilée s'étendant dans l'ensemble suivant une direction longitudinale du navire (1), lesdites parties profilées présentant, sur les côtés de proue opposés du navire, un bord avant, dans le sens du mouvement, définissant au moins une ouverture d'entrée dudit passage d'écoulement d'eau (7) et un bord arrière, dans le sens du mouvement, définissant au moins une ouverture de sortie dudit passage d'écoulement d'eau (7), les parties profilées ayant des surfaces intérieures convexes, lesdits passages d'écoulement convergeant, puis divergeant suivant une direction vers l'arrière du navire, lesdites surfaces intérieures convexes augmentant la vitesse de l'eau passant dans lesdits passages d'écoulement vis-à-vis de la vitesse de l'eau s'écoulant autour de la surface extérieure dudit conduit d'étrave (2), afin de créer une pression réduite à l'intérieur dudit conduit d'étrave (2) et une dépression d'écoulement en aval dudit conduit d'étrave (2), ledit conduit d'étrave comportant des plaques de guidage espacées verticalement présentant une section profilée, faisant saillie vers l'intérieur à partir de la surface intérieure desdites parties de paroi de côté et adaptées pour s'étendre dans l'ensemble suivant la direction longitudinale du navire, de façon à améliorer l'écoulement d'eau laminaire dans lesdits passages d'écoulement (7), la section profilée desdites plaques de guidage étant orientée avec son bord avant, suivant le sens du mouvement, situé à l'endroit de ladite ouverture d'entrée dudit passage d'écoulement d'eau (7) et son bord arrière, suivant le sens du mouvement, situé à l'endroit de ladite ouverture de sortie dudit passage d'écoulement d'eau (7), et lesdites plaques de guidage espacées verticalement étant montées soit à l'endroit de ladite surface intérieure de chacune desdites parties de paroi de côté, soit à l'endroit de chacun, correspondant, desdits côtés de proue et/ou étant pourvues de fentes le long, ou en travers, de la distance existant entre lesdites parties de paroi de côté et lesdits côtés de proue, de façon à permettre une communication verticale de l'écoulement d'eau à l'intérieur desdits passages d'écoulement (7).

2. Conduit d'étrave selon la revendication 1, **caractérisé en ce qu'**il est conformé de façon à suivre sensiblement la forme des côtés de proue opposés, une distance sensiblement égale étant obtenue entre les parties de paroi dudit conduit et lesdits côtés de proue opposés.

3. Conduit d'étrave selon la revendication 1, **caractérisé en ce que** lesdites parties profilées sont adaptées pour être montées sur les côtés de proue opposés d'une manière telle que les extrémités supérieures des parties profilées sont fermées en étant soudées sur chaque côté de la surface frontale de proue dudit navire (1), de sorte qu'est défini un conduit d'étrave (2) périphériquement fermé.

4. Conduit d'étrave selon la revendication 1, **caractérisé en ce qu'**il comprend des éléments de support (4) adaptés pour être montés sur les côtés de proue opposés d'une manière telle que ledit conduit d'étrave (2) est partiellement ouvert à l'endroit de la partie supérieure de l'un ou l'autre côté du navire (1).

5. Conduit d'étrave de la revendication 3 ou 4, **caractérisé en ce que** ledit conduit d'étrave comportant des plaques de guidage espacées verticalement présentant une section profilée, faisant saillie vers l'intérieur à partir de la surface intérieure de chacune desdites parties de paroi de côté et adaptées pour s'étendre dans l'ensemble suivant la direction longitudinale du navire jusqu'aux côtés de proue opposés, de façon à améliorer l'écoulement d'eau laminaire dans lesdits passages d'écoulement (7), la section profilée desdites plaques de guidage étant orientée avec son bord avant, suivant le sens du mouvement, situé à l'endroit de ladite ouverture d'entrée dudit passage d'écoulement d'eau (7) et son bord arrière, suivant le sens du mouvement, situé à l'endroit de ladite ouverture de sortie dudit passage d'écoulement d'eau (7).

6. Conduit d'étrave selon la revendication 1, dans lequel ledit conduit d'étrave présente une surface extérieure plane.

7. Conduit d'étrave selon la revendication 1, dans lequel ledit conduit d'étrave présente une surface extérieure concave.

**8.** Conduit d'étrave selon la revendication 2, monté sur un navire en combinaison avec lesdits côtés de proue opposés amincis d'une manière adéquate.

**9.** Conduit d'étrave de navire à section profilée suivant les revendications 1 - 8 ci-dessus, dans lequel l'emplacement dudit conduit sur la proue du navire, la forme géométrique de ladite section profilée, la hauteur dudit conduit au-dessus et au-dessous de la ligne de flottaison du navire, sa longueur le long de la direction de l'écoulement, son inclinaison vis-à-vis de l'axe de symétrie du navire et sa distance à partir de la quille du navire sont déterminés conformément à la morphologie de la proue, aux coefficients de quille et à la vitesse du navire.

FIG. 1.

FIG. 2.

FIG. 3.

FIG. 4.

FIG. 5.

FIG. 7.

FIG. 6.

FIG. 8.

FIG.9.

FIG.10.

FIG. 11.

FIG. 15.

FIG.12.

FIG.13.

FIG. 14.

FIG.16.